# EUROPEAN PATENT SPECIFICATION

(11) **EP 3 206 150 B1**
(45) Date of publication and mention of the grant of the patent: **01.05.2019**
(21) Application number: 15849622.4
(22) Date of filing: 09.03.2015
(51) Int. Cl.: G06F 21/32, G06F 21/57, G06F 21/62

(54) **FINGERPRINT INPUT INFORMATION PROCESSING METHOD, SYSTEM AND MOBILE TERMINAL**
VERFAHREN, SYSTEM UND MOBILES ENDGERÄT ZUR FINGERABDRUCKEINGABEINFORMATIONSVERARBEITUNG
PROCÉDÉ ET SYSTÈME DE TRAITEMENT D'INFORMATIONS D'ENTRÉE D'EMPREINTE DIGITALE, ET TERMINAL MOBILE

(30) Priority: 11.10.2014 CN 201410534375
(43) Date of publication of application: 16.08.2017
(73) Proprietor: Shenzhen Goodix Technology Co., Ltd., Futian Free Trade Zone Shenzhen, Guangdong 518000 (CN)
(72) Inventor: HAO, Qiyi, Shenzhen Guangdong 518000 (CN); HUNG, Chiu-po, Shenzhen Guangdong 518000 (CN)
(74) Representative: Kraus & Weisert Patentanwälte PartGmbB
(86) International application number: PCT/CN2015/073908
(87) International publication number: WO 2016/054890

(56) References cited:
- CN-A- 101 727 567
- CN-A- 103 218 557
- CN-A- 103 279 411
- CN-A- 103 886 237
- CN-A- 104 361 272
- US-A1- 2009 190 805
- US-A1- 2013 324 089

## Description

### TECHNICAL FIELD

The present invention pertains to the field of fingerprint identification, and in particularly, relates to a method and a system for processing input fingerprint information, and a mobile terminal.

### BACKGROUND

In modern life, people are more and more dependent on mobile phones, and are imposing higher and higher requirements on convenience, responsiveness and security of the mobile phones.

For example, the mobile phones are currently provided with various APPs (applications), and some APPs are less frequently used, for example, the photographing APP. However, sometimes, we need to quickly start the photographing APP from a standby screen-off state to take photos. In this case, a high requirement is imposed on the convenience and responsiveness of the startup of the photographing APP. Therefore, if such applications can be started more quickly, a better experience may be brought to users. In recent years, iPhones highly promote application of the fingerprint identification technology in mobile terminals. At present, many mobile phone manufacturers are starting their deployment of products supporting finger print identification.

Chinese utility model patent publication No. CN203117990 U, entitled "MOBILE TERMINAL HAVING FINGERPRINT UNLOCKING FUNCTION", has disclosed a mobile terminal having the fingerprint unlocking function, which includes a touch control module and a panel. The panel includes an outer frame and a transparent touch panel embedded in an intermediate portion of the outer frame. The touch control module is electrically connected to the transparent touch panel. The mobile terminal further includes a fingerprint scanning camera arranged beneath the outer frame, and a fingerprint data processing module that is respectively electrically connected to the touch control module and the fingerprint scanning camera. The fingerprint data processing module is configured to receive a fingerprint unlocking touch instruction via the touch control module and the transparent touch panel, start the fingerprint scanning camera to collect fingerprint information of a finger touching the transparent touch panel, receive the collected fingerprint information and compare the collected fingerprint information with pre-stored authorized fingerprint information, and control the mobile terminal to be unlocked upon determination that the collected fingerprint information is consistent with a fingerprint in the authorized fingerprint information. This utility model is low in design cost, reliable in security and simple in operation.

With the increasing requirements of users, the fingerprint technology is not constrained to such aspects as unlocking and the like. How to attain a more convenient, quicker and funny use experience is an innovation development trend for the fingerprint technology. In addition, modern people highly concern about their privacies, and when the mobile phones have to be lent to others, some applications which are not to be used by others in the mobile phones may bring about unnecessary troubles or embarrassments.

Therefore, mobile phones that are improved in terms of convenience, responsiveness, security, privacy protection and the like would be more populated by consumers.

US 2013/0324089 A1 discloses a portable terminal provides a fingerprint-based shortcut key to realize both security and one touch convenience. The portable terminal includes a fingerprint sensor for recognizing user's fingerprint, a memory for storing first fingerprint data inputted through the fingerprint sensor and a function of the portable terminal in the memory. Upon input of second fingerprint data through the fingerprint sensor, there is a comparison of the first fingerprint data with the second fingerprint print data, and performing the function mapped to the first fingerprint data when the first fingerprint data is identical to the second fingerprint data.

CN 103218557 A discloses a biological-recognition-based system theme switching method and device. The method comprises the following steps of receiving biological recognition information; searching for a corresponding system theme or operation from a preset characteristic information and system theme corresponding list according to the biological recognition information; and switching to the corresponding system theme or operation when the corresponding system theme or operation is found. According to the method and the device, provided by the invention, the security of terminal equipment during use can be improved.

### SUMMARY

A first technical problem to be solved by the present invention is to provide a method for processing input fingerprint information, in order to improve the convenience, quickness and privacy and the like performance of mobile terminals such as mobile phones.

The present invention is implemented by: a method for processing input fingerprint information, wherein the method includes the following steps:
a fingerprint information identification step: when it is scanned that fingerprint information is input, identifying whether a fingerprint template matching with the input fingerprint information is present in a fingerprint database, wherein the fingerprint database comprises a plurality of pre-registered fingerprint templates, each fingerprint template being associated with an application operation; and
an operation execution step: if it is identified that a fingerprint template matching with the input fingerprint information is present in the fingerprint database, performing the application operation associated with the identified fingerprint template;
wherein the fingerprint identification step is performed in a standby screen-off state; and when the fingerprint identification step is performed in the standby screen-off state, the operation execution step comprises lighting up a screen firstly and then performing the application operation associated with the fingerprint template.

A second technical problem to be solved by the present invention is to provide a system for processing input fingerprint information, which includes:
a fingerprint database establishing module, configured to register fingerprint templates and set each fingerprint template to be associated with an application
   operation;
a fingerprint information identifying module, configured to, when it is scanned that fingerprint information is input, identifying whether a fingerprint template matching with the input fingerprint information is present in the fingerprint database; and
an operation executing module, configured to, if it is identified that a fingerprint template matching with the input fingerprint information is present in the fingerprint database, perform the application operation associated with the identified fingerprint template;
wherein the fingerprint information identifying module performs the operation in a standby screen-off state; and when performing an operation in the standby screen off state, the operation executing module firstly lights up a screen and then performs the application operation associated with the fingerprint template.

A third technical problem to be solved by the present invention is to provide a mobile terminal which includes the above system for processing input fingerprint information.

In the present invention, a plurality of fingerprints are pre-registered as fingerprint templates, and then an application operation (for example, an software application or function) is set to be associated with each fingerprint template. In this way, no matter in a screen-on state or in screen-off state, the associated application may be started, such that a user experiences more convenient and quicker services. In the present invention, since various application operations are all associated with specific fingerprint information, the privacy is better protected.

### BRIEF DESCRIPTION OF THE DRAWINGS

FIG. 1 is a flowchart of a method for processing input fingerprint information according to an embodiment of the present invention; and
FIG. 2 is a structural principle diagram of a system for processing input fingerprint information according to an embodiment of the present invention.

### DETAILED DESCRIPTION

In order to make the objectives, technical solutions, and advantages of the present invention clearer, the present invention is further described in detail below by reference to the embodiments and the accompanying drawings. It should be understood that the embodiments described here are only exemplary ones for illustrating the present invention, and are not intended to limit the present invention.

In the present invention, a plurality of fingerprints are pre-registered as fingerprint templates respectively, and then each fingerprint templates is configured to be associated with a corresponding application operation (for example, an software application or function). In this way, after it is scanned that fingerprint information is input by a user, a matching operation is performed between the input fingerprint information and the fingerprint templates. If a fingerprint template matches with the fingerprint information, the associated application operation may be directly performed. This may be specifically applicable to such mobile terminals supporting the fingerprint identification function as mobile phones, PDAs, iPads and the like. Further, the fingerprint template further includes fingerprint orientation information, and during the matching operation, when the orientation of the input fingerprint information is consistent with the fingerprint orientation information of the fingerprint template, the associated application operation is performed.

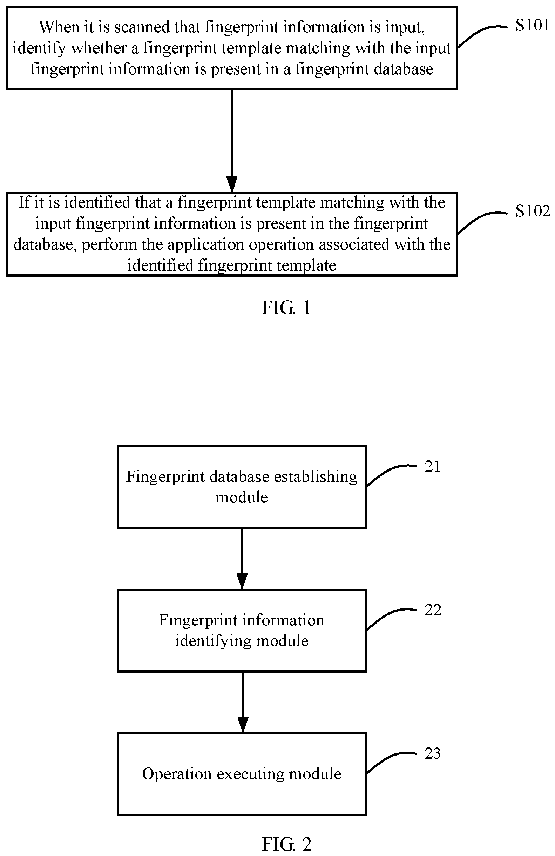

FIG. 1 is an implementation flowchart of a method for logging in to a terminal based on fingerprint identification in a standby state according to an embodiment of the present invention, which is described in detail hereinafter.

In step S101, identification of fingerprint information is mainly performed; when it is scanned that fingerprint information is input, it is identified whether a fingerprint template matching with the input fingerprint information is present in a fingerprint database, wherein each fingerprint template is associated with an corresponding application operation.

In the embodiment of the present invention, a user needs to pre-register a plurality of fingerprint templates, each fingerprint template includes regular fingerprint information; and each fingerprint template is set to be associated with a corresponding application operation, wherein the application operation may be an APP application, a working mode application, a dialup application, an operating system application, a system theme application, or the like. This step may be performed in a screen-on state, a standby screen-off state, an unlocked state, or a locked state of the mobile terminal.

Further, each fingerprint template further includes fingerprint orientation information. A same fingerprint with different orientations may be associated with different application operation.

In step S102, the specific application operation is performed; if it is identified that a fingerprint template matching with the input fingerprint information is present in the fingerprint database, the application operation associated with the identified fingerprint template is performed.

When the fingerprint template includes the fingerprint orientation information, if it is scanned that fingerprint information is input, it is identified whether a fingerprint template matching with both the input fingerprint information and the orientation information thereof is present in the fingerprint database.

As described above, step S101 may be performed in either the screen-on state or the standby screen-off state of the mobile terminal; and when this step is performed in the standby screen-off state, in step S102, the screen needs to be firstly lit up and then the application operation associated with the fingerprint template is performed.

Hereinafter, the specific principle of step S102 is described by taking the APP application, the working mode application, the dialup application, the operating system or the system theme application as an example.

**With respect to the APP application,** if it is identified that a fingerprint template matching with the input fingerprint information is present in the fingerprint database, the APP application associated with the identified fingerprint template is started. Further, an upward touch, a downward touch, a leftward touch and a rightward touch of the finger relative to a fingerprint sensor may be respectively identified, and be associated with different APP applications.

When a mobile phone is in a screen-off state, the screen is directly lit up and a photographing software is opened after a finger 1 that has been registered upwardly touches the fingerprint sensor. A browser is directly launched after the finger 1 leftwardly touches the fingerprint sensor. It should be understand that this embodiment is not limited to the photographing software, and the finger's touch orientation is not limited to the upward touch, the leftward touch, the rightward touch and the downward touch. The user may associate different orientations of a registered fingerprint with different APP applications, to reach the objective of quick startup.

When the mobile phone is in a screen-on state, the photographing software is opened after the finger 1 that has been registered touches upwardly the fingerprint sensor. A browser is directly launched after the finger 1 leftwardly touches the fingerprint sensor. Likewise, this embodiment is not limited to the photographing software, and the finger's touch orientation is not limited to upward touch, leftward touch, rightward touch and downward touch. The user may associate different orientations of a registered fingerprint with different APP applications, to reach the objective of quick startup.

**With respect to the working mode application,** in the embodiment of the present invention, the working mode includes an owner mode and a non-owner mode having different authorities. If it is identified that a fingerprint template matching with the input fingerprint information is present in the fingerprint database and the fingerprint information corresponds to the owner mode, the owner mode is entered; if it is identified that a fingerprint template matching with the input fingerprint information is present in the fingerprint database and the fingerprint information corresponds to the non-owner mode, the non-owner mode is entered. If it is identified that no fingerprint template matching with the input fingerprint information is present in the fingerprint database, the system is not entered or a predetermined system mode is entered. Further, an upward touch, a downward touch, a leftward touch and a rightward touch of the finger relative to a fingerprint sensor may respectively start or switch to different system mode.

The system of the mobile phone may be set to different system modes according to privacy or security levels, for example, a user mode and a guest mode (this embodiment is not limited to these system modes). Each mode has different usage authorities. For example, some files may not be viewed or may be invisible in the guest mode (or in other non-owner usage modes); or some APPs may not be opened or may be invisible in the guest mode (or in other non-owner usage modes). The user may define the upward touch orientation of his or her registered finger 1 (or other fingers) to correspond to the user mode, and define the leftward touch orientation to the guest mode (or other non-owner usage modes).

In the screen-off state, when the finger upwardly touches the fingerprint sensor, the screen may be directly lit on and the user mode is entered; and when the finger leftwardly touches the fingerprint sensor, the guest mode is entered. In the screen-on state, the above functions may be likewise implemented.

The above described system modes are not limited to the user mode and the guest mode, but may be other system modes defined according to categorization of other characteristics, for example, an elder mode, a simplified mode, a child mode and the like. In addition, the touch orientation of the finger is not limited to the upward touch, the leftward touch, the rightward touch and the downward touch.

**With respect to the dialup application,** if it is identified that a fingerprint template matching with the input fingerprint information is present in the fingerprint database, a telephone number corresponding to the identified fingerprint template is dialed.

Further, the user may set different touch orientations of the finger in relative to the fingerprint sensor to correspond to different numbers. For example, an identification of upward touch of the finger 1 corresponds to a telephone number 1; and an identification of leftward touch of the finger 1 corresponds to a telephone number 2. When a call needs to be made, the user may make the corresponding finger touch the fingerprint sensor according to the corresponding touch orientation, and upon identification by the system, the correspondingly telephone number may be directly dialed through.

Herein, the telephone number may be dialed anytime when necessary, which is not limited to the scenario of whether the device is the screen-on state or the screen-off state.

**With respect to the operating system application,** if it is identified that a fingerprint template matching with the input fingerprint information is present in the fingerprint database, an operating system or a ROM associated with the identified fingerprint template is started.

Some mobile phones are installed with different operating systems (or ROMs), and the user may set different fingerprints to correspond to different operating systems (or ROMs). Further, different operating systems (or ROMs) are launched in combination with different fingerprint orientation information. For example, an upward touch on the fingerprint sensor by the finger 1 corresponds to an operating system 1 (or a ROM 1), and a leftward touch on the fingerprint sensor by the finger 1 corresponds to an operating system 2 (or a ROM 2). When the operating system (or the ROM) needs to be switched or an operating system (or a ROM) needs to be loaded, the user may select different operating systems (or ROMs) to start by using the registered finger to touch on the fingerprint sensor with different touch orientations.

The above described operating system switching may be performed where necessary, which is not limited to the scenario of whether the device is the screen-on state or the screen-off state.

**With respect to a system theme application,** if it is identified that a fingerprint template matching with the input fingerprint information is present in the fingerprint database, system theme information associated with the identified fingerprint template is loaded.

Some mobile phones are provided with different system themes (different interface styles, background styles and the like). Further, the user may set different fingerprint touch orientations to correspond to different system themes (interface styles, background styles and the like). For example, an upward touch on the fingerprint sensor by the finger 1 corresponds to a system subject 1 (or an interface style, a background style and the like), and a leftward touch on the fingerprint sensor by the finger 1 corresponds to a system subject 2 (or an interface style, a background style and the like). When the system theme (or the interface style, the background style and the like) needs to be switched or a system theme (or an interface style, a background style and the like) needs to be loaded, the user may select different system themes (or interface styles, background styles and the like) by using the finger to touch on the fingerprint sensor with different touch orientations.

Likewise, the system subject is switched anytime, which is not limited to the scenario of whether the device is the screen-on state or the screen-off state.

It is understandable to those skilled in the art that all or partial steps of the method described in the above embodiments can be implemented by controlling relevant hardware by programs. The programs may be stored in a computer readable storage medium. The storage medium may be a read only memory (ROM), random access memory (RAM), a magnetic disk or a compact disc read-only memory (CD-ROM).

FIG. 2 is a structural principle diagram of a system for processing input fingerprint information according to an embodiment of the present invention. For ease of description, only portions relevant to the present invention are illustrated in FIG. 2. The system for processing input fingerprint information may be a software unit, a hardware unit or a software-hard hybrid unit that is built in a mobile terminal supporting the fingerprint identification function.

Referring to FIG. 2, the system for processing input fingerprint information includes a database establishing module 21, a fingerprint information identifying module 22 and an operating executing module 23. The fingerprint database establishing module 21 is configured to register fingerprint templates and set each fingerprint template to be associated with a corresponding application operation ; the fingerprint information identifying module 22 is configured to, when it is scanned that fingerprint information is input, identifying whether a fingerprint template matching with the input fingerprint information is present in the fingerprint database; and the operation executing module 23 is configured to, if it is identified that a fingerprint template matching with the input fingerprint information is present in the fingerprint database, perform the application operation associated with the identified fingerprint template.

Further, the fingerprint template further includes orientation information of the fingerprint; and the fingerprint information identifying module 22 is further configured to, when it is scanned that fingerprint information is input, identifying whether a fingerprint template matching with both the input fingerprint information and the orientation information is present in the fingerprint database.

As described above, the fingerprint information identifying module 21 may perform the operation in a screen-on state, a standby screen-off state , an unlocked state or a locked state; and when performing an operation in the standby screen-off state, the operation executing module 23 firstly lights up the screen and then performs the application operation associated with the fingerprint template.

When the application operation associated with the fingerprint template is an APP application, the operation executing module 23 is further configured to, if it is identified that a fingerprint template matching with the input fingerprint information is present in the fingerprint database, start the APP application associated with the identified fingerprint template.

When the application operation associated with the fingerprint template is an application regarding a working mode, the working mode including a owner mode and a non-owner mode comprising different authorities, the operation executing module 23 is further configured to: if it is identified that a fingerprint template matching with the input fingerprint information is present in the fingerprint database and the fingerprint information corresponds to the owner mode, enter the owner mode; if it is identified that a fingerprint template matching with the input fingerprint information is present in the fingerprint database and the fingerprint information corresponds to the non-owner mode, enter the non-owner mode; and if it is identified that no fingerprint template matching with the input fingerprint information is present in the fingerprint database, refuse to enter the system or enter a predetermined system mode.

When the application operation associated with the fingerprint template is a dialup application, the operation executing module 23 is further configured to, if it is identified that a fingerprint template matching with the input fingerprint information is present in the fingerprint database, dial a telephone number corresponding to the identified fingerprint template.

When the application operation associated with the fingerprint template is an operating system application, the operation executing module 23 is further configured to, if it is identified that a fingerprint template matching with the input fingerprint information is present in the fingerprint database, start an operating system or a ROM associated with the identified fingerprint template.

When the application operation associated with the fingerprint template is a system theme application, the operation executing module 23 is further configured to, if it is identified that a fingerprint template matching with the input fingerprint information is present in the fingerprint database, load system theme information associated with the identified fingerprint template.

In conclusion, according to the present invention, based on the fingerprint identification technology, a plurality of application manners associated respectively with various fingerprint templates are proposed according to the actual usage scenario of the user, thereby improving the convenience, quickness and security performance of the mobile phone during use.

The above descriptions are merely preferred embodiments of the present invention, but not intended to limit the present invention. Any modification, equivalent replacement, and improvement made without departing from the principle of the present invention shall fall within the protection scope of the present invention.

## Claims

1. A method for processing input fingerprint information, comprising:
a fingerprint information identification step (S101): when it is scanned that fingerprint information is input, identifying whether a fingerprint template matching with the input fingerprint information is present in a fingerprint database, wherein the fingerprint database comprises a plurality of pre-registered fingerprint templates, each fingerprint template being associated with an application operation; and
an operation execution step (SI02): if it is identified that a fingerprint template matching with the input fingerprint information is present in the fingerprint database, performing the application operation associated with the identified fingerprint template, **characterized by**:
wherein the fingerprint identification step is performed in a standby screen-off state; and when the fingerprint identification step is performed in the standby screen-off state, the operation execution step comprises lighting up a screen firstly and then performing the application operation associated with the fingerprint template.

2. The method for processing input fingerprint information according to claim 1, wherein the fingerprint template further comprises fingerprint orientation information; and
the fingerprint information identification step comprises: when it is scanned that fingerprint information is input, identifying whether a fingerprint template matching with both the input fingerprint information and orientation information thereof is present in the fingerprint database.

3. The method for processing input fingerprint information according to claim 1 or claim 2, wherein the application operation associated with the fingerprint template is an application, and the operation execution step comprises: if it is identified that a fingerprint template matching with the input fingerprint information is present in the fingerprint database, starting the application associated with the identified fingerprint template.

4. The method for processing input fingerprint information according to claim 1 or claim 2, wherein the application operation associated with the fingerprint template is an application regarding a working mode, the working mode comprising an owner mode and a non-owner mode comprising different authorities and the operation execution step comprises:
if it is identified that a fingerprint template matching with the input fingerprint information is present in the fingerprint database and the fingerprint information corresponds to the owner mode, entering the owner mode;
if it is identified that a fingerprint template matching with the input fingerprint information is present in the fingerprint database and the fingerprint information corresponds to the non-owner mode, entering the non-owner mode; and
if it is identified that no fingerprint template matching with the input fingerprint information is present in the fingerprint database, refusing to enter the system or entering a predetermined system mode.

5. The method for processing input fingerprint information according to claim 1 or claim 2, wherein the application operation associated with the fingerprint template is a dialup application, and the operation execution step comprises:
if it is identified that a fingerprint template matching with the input fingerprint information is present in the fingerprint database, dialing a telephone number corresponding to the identified fingerprint template.

6. The method for processing input fingerprint information according to claim 1 or claim 2, wherein the application operation associated with the fingerprint template is an operating system application, and the operation execution step comprises:
if it is identified that a fingerprint template matching with the input fingerprint information is present in the fingerprint database, starting an operating system or a ROM associated with the identified fingerprint template.

7. The method for processing input fingerprint information according to claim 1 or claim 2, wherein the application operation associated with the fingerprint template is a system theme application, and the operation execution step comprises:
if it is identified that a fingerprint template matching with the input fingerprint information is present in the fingerprint database, loading system theme information associated with the identified fingerprint template.

8. A system for processing input fingerprint information, comprising:
a fingerprint database establishing module (21), configured to register fingerprint templates and set each fingerprint template to be associated with an application operation;
a fingerprint information identifying module (22), configured to, when it is scanned that fingerprint information is input, identifying whether a fingerprint template matching with the input fingerprint information is present in the fingerprint database; and
an operation executing module (23), configured to, if it is identified that a fingerprint template matching with the input fingerprint information is present in the fingerprint database, perform the application operation associated with the identified fingerprint template, **characterized by**:
wherein the fingerprint information identifying module performs the operation in a standby screen-off state; and when performing the operation in the standby screen off state, the operation executing module firstly lights up a screen and then performs the application operation associated with the fingerprint template.

9. The system for processing input fingerprint information according to claim 8, wherein the fingerprint template further comprises fingerprint orientation information; and
the fingerprint information identifying module is further configured to, when it is scanned that fingerprint information is input, identifying whether a fingerprint template matching with both the input fingerprint information and orientation thereof information is present in the fingerprint database.

10. The system for processing input fingerprint information according to claim 8 or claim 9, wherein the application operation associated with the fingerprint template is an application, and the operation execution module is further configured to, if it is identified that a fingerprint template matching with the input fingerprint information is present in the fingerprint database, starting the application associated with the identified fingerprint template.

11. The system for processing input fingerprint information according to claim 8 or claim 9, wherein the application operation associated with the fingerprint template is an application regarding a working mode, the working mode comprising an owner mode and a non-owner mode comprising different authorities; and
the operation executing module is further configured to: if it is identified that a fingerprint template matching with the input fingerprint information is present in the fingerprint database and the fingerprint information corresponds to the owner mode, enter the owner mode;
if it is identified that a fingerprint template matching with the input fingerprint information is present in the fingerprint database and the fingerprint information corresponds to the non-owner mode, enter the non-owner mode; and
if it is identified that no fingerprint template matching with the input fingerprint information is present in the fingerprint database, refuse to enter the system or enter a predetermined system mode.

12. The system for processing input fingerprint information according to claim 8 or claim 9, wherein
the application operation associated with the fingerprint template is a dialup application, and the operation execution module is further configured to, if it is identified that a fingerprint template matching with the input fingerprint information is present in the fingerprint database, dial a telephone number corresponding to the identified fingerprint template;
the application operation associated with the fingerprint template is an operating system application, and the operation execution module is further configured to, if it is identified that a fingerprint template matching with the input fingerprint information is present in the fingerprint database, start an operating system or a ROM associated with the identified fingerprint template; or the application operation associated with the fingerprint template is a system theme application, and the operation execution module is further configured to, if it is identified that a fingerprint template matching with the input fingerprint information is present in the fingerprint database, load system theme information associated with the identified fingerprint template.

13. A mobile terminal, comprising the system for processing input fingerprint information as defined in any one of claims 8 to 12.

## Patentansprüche

1. Verfahren zum Verarbeiten von eingegebenen Fingerabdruckinformationen, umfassend: einen Fingerabdruckinformationsidentifizierungsschritt (SIOI): wenn es gescannt wird, dass eine Fingerabdruckinformation eingegeben ist, wird es identifiziert, ob eine mit eingegebener Fingerabdruckinformation übereinstimmende Fingerabdruckvorlage in einer Fingerabdruckdatenbank vorliegt oder nicht, wobei die Fingerabdruckdatenbank eine Vielzahl von vorab registrierten Fingerabdruckvorlagen umfasst, wobei jede Fingerabdruckvorlage einem Anwendungsbetrieb zugeordnet ist; und einen Betriebsausführungsschritt (SI02): wenn es identifiziert wird, dass die mit der eingegebenen Fingerabdruckinformation übereinstimmende Fingerabdruckvorlage in der Fingerabdruckdatenbank vorliegt, wird ein der festgestellten Fingerabdruckvorlage zugeordneter Anwendungsbetrieb ausgeführt, **dadurch gekennzeichnet**: wobei der Fingerabdruckidentifizierungsschritt in einem Standby-Bildschirm-Aus-Zustand ausgeführt wird; und wenn der Fingerabdruckidentifizierungsschritt in dem Standby-Bildschirm-Aus-Zustand ausgeführt wird, der Betriebsausführungsschritt zunächst das Beleuchten eines Bildschirms und dann das Ausführen des der Fingerabdruckvorlage zugeordneten Anwendungsbetriebs umfasst.

2. Verfahren zum Verarbeiten von eingegebenen Fingerabdruckinformationen nach Anspruch 1, wobei die Fingerabdruckvorlage ferner eine Fingerabdruckrichtungsinformation umfasst; und der Fingerabdruckinformationsidentifizierungsschritt umfasst: wenn es gescannt wird, dass die Fingerabdruckinformation eingegeben ist, wird es identifiziert, ob eine jeweils an der eingegebenen Fingerabdruckinformation und Richtungsinformation angepasste Fingerabdruckvorlage in der Fingerabdruckdatenbank vorliegt oder nicht.

3. Verfahren zum Verarbeiten von eingegebenen Fingerabdruckinformationen nach Anspruch 1 oder 2, wobei der der Fingerabdruckvorlage zugeordnete Anwendungsbetrieb eine Anwendung ist, und der Betriebsausführungsschritt umfasst: wenn es identifiziert wird, dass eine der eingegebenen Fingerabdruckinformation übereinstimmende Fingerabdruckvorlage in der Fingerabdruckdatenbank vorliegt, startet die der identifizierten Fingerabdruckvorlage zugeordnete Anwendung.

4. Verfahren zum Verarbeiten von eingegebenen Fingerabdruckinformationen nach Anspruch 1 oder 2, wobei der der Fingerabdruckvorlage zugeordnete Anwendungsbetrieb eine sich auf einen Arbeitsmodus beziehende Anwendung ist, wobei der Arbeitsmodus einen Besitzermodus und einen Nicht-Besitzermodus umfasst, die verschiedene Befugnisse umfassen, und der Betriebsausführungsschritt umfasst:
wenn es identifiziert wird, dass eine mit der eingegebenen Fingerabdruckinformation übereinstimmende Fingerabdruckvorlage in der Fingerabdruckdatenbank vorliegt und die Fingerabdruckinformation dem Besitzermodus entspricht, wird der Besitzermodus aufgerufen;
wenn es identifiziert wird, dass eine mit der eingegebenen Fingerabdruckinformation übereinstimmende Fingerabdruckvorlage in der Fingerabdruckdatenbank vorliegt und die Fingerabdruckinformation dem Nicht-Besitzermodus entspricht, wird der Nicht-Besitzermodus aufgerufen; und
wenn es identifiziert wird, dass keine mit der eingegebenen Fingerabdruckinformation übereinstimmende Fingerabdruckvorlage in der Fingerabdruckdatenbank vorliegt, wird ein Aufruf eines Systems oder eines vorbestimmten Systemmoduses verweigert.

5. Verfahren zum Verarbeiten von eingegebenen Fingerabdruckinformationen nach Anspruch 1 oder 2, wobei der der Fingerabdruckvorlage zugeordnete Anwendungsbetrieb eine Telefonwahlanwendung ist, und der Betriebsausführungsschritt umfasst:
wenn es identifiziert wird, dass eine mit der eingegebenen Fingerabdruckinformation übereinstimmende Fingerabdruckvorlage in der Fingerabdruckdatenbank vorliegt, wird eine der identifizierten Fingerabdruckvorlage entsprechende Telefonnummer gewählt.

6. Verfahren zum Verarbeiten von eingegebenen Fingerabdruckinformationen nach Anspruch 1 oder 2, wobei der der Fingerabdruckvorlage zugeordnete Anwendungsbetrieb eine Betriebssystemanwendung ist, und der Betriebsausführungsschritt umfasst:
wenn es identifiziert wird, dass eine mit der eingegebenen Fingerabdruckinformation übereinstimmende Fingerabdruckvorlage in der Fingerabdruckdatenbank vorliegt, startet ein Betriebssystems oder ein ROM, das der identifizierten Fingerabdruckvorlage zugeordnet ist.

7. Verfahren zum Verarbeiten von eingegebenen Fingerabdruckinformationen nach Anspruch 1 oder 2, wobei der der Fingerabdruckvorlage zugeordnete Anwendungsbetrieb eine Systemthemaanwendung ist, und der Betriebsausführungsschritt umfasst: wenn es identifiziert wird, dass eine mit der eingegebenen Fingerabdruckinformation übereinstimmende Fingerabdruckvorlage in der Fingerabdruckdatenbank vorliegt, wird eine der identifizierten Fingerabdruckvorlage zugeordneten Information zum Systemthema geladen.

8. System zum Verarbeiten von eingegebenen Fingerabdruckinformationen, umfassend:
ein Fingerabdruckdatenbank-Einrichtungsmodul (21), das dazu konfiguriert ist, Fingerabdruckvorlagen zu registrieren und die Fingerabdruckvorlagen so einzustellen, dass jede davon einem Anwendungsbetrieb zugeordnet ist;
ein Fingerabdruckinformationsidentifizierungsmodul (22), das dazu konfiguriert ist, wenn es gescannt wird, dass eine Fingerabdruckinformation eingegeben ist, es zu identifizieren, ob eine mit der eingegebenen Fingerabdruckinformation übereinstimmende Fingerabdruckvorlage in der Fingerabdruckdatenbank vorliegt oder nicht; und
ein Betriebsausführungsmodul (23), das dazu konfiguriert ist, wenn es identifiziert wird, dass eine mit der eingegebenen Fingerabdruckinformation übereinstimmende Fingerabdruckvorlage in der Fingerabdruckdatenbank vorliegt, wird der mit der identifizierten Fingerabdruckvorlage zugeordnete Anwendungsbetrieb ausgeführt, **dadurch gekennzeichnet**:
wobei das Fingerabdruckinformationsidentifizierungsmodul den Betrieb in einem Standby-Bildschirm-Aus-Zustand ausführt; und wenn der Betrieb in einem Standby-Bildschirm-Aus-Zustand ausgeführt wird, das Betriebsausführungsmodul zunächst einen Bildschirm beleuchtet und dann den der Fingerabdruckvorlage zugeordneten Anwendungsbetrieb ausführt.

9. System zum Verarbeiten von eingegebenen Fingerabdruckinformationen nach Anspruch 8, wobei die Fingerabdruckvorlage ferner eine Fingerabdruckrichtungsinformation umfasst; und das Fingerabdruckinformationsidentifizierungsmodul ferner so konfiguriert ist, wenn gescannt wird, dass die Fingerabdruckinformation eingegeben ist, es zu identifizieren, ob eine jeweils an der eingegebenen Fingerabdruckinformation und Richtungsinformation angepasste Fingerabdruckvorlage in der Fingerabdruckdatenbank vorliegt oder nicht.

10. System zum Verarbeiten von eingegebenen Fingerabdruckinformationen nach Anspruch 8 oder 9, wobei der der Fingerabdruckvorlage zugeordnete Anwendungsbetrieb eine Anwendung ist und das Betriebsausführungsmodul ferner so konfiguriert ist, wenn es identifiziert wird, dass eine mit der eingegebenen Fingerabdruckinformation übereinstimmende Fingerabdruckvorlage in der Fingerabdruckdatenbank vorliegt, die der identifizierten Fingerabdruckvorlage zugeordnete Anwendung startet.

11. System zum Verarbeiten von eingegebenen Fingerabdruckinformationen nach Anspruch 8 oder 9, wobei der der Fingerabdruckvorlage zugeordnete Anwendungsbetrieb eine sich auf einen Arbeitsmodus beziehende Anwendung ist, wobei der Arbeitsmodus einen Besitzermodus und einen Nicht-Besitzermodus umfasst, die verschiedene Befugnisse umfassen; und das Betriebsausführungsmodul ferner so konfiguriert ist: wenn es identifiziert wird, dass eine mit der eingegebenen Fingerabdruckinformation übereinstimmende Fingerabdruckvorlage in der Fingerabdruckdatenbank vorliegt und die Fingerabdruckinformation dem Besitzermodus entspricht, der Besitzermodus aufgerufen wird;
wenn es identifiziert wird, dass eine mit der eingegebenen Fingerabdruckinformation übereinstimmende Fingerabdruckvorlage in der Fingerabdruckdatenbank vorliegt und die Fingerabdruckinformation dem Nicht-Besitzermodus entspricht, der Nicht-Besitzermodus aufgerufen wird; und
wenn es identifiziert wird, dass keine mit der eingegebenen Fingerabdruckinformation übereinstimmende Fingerabdruckvorlage in der Fingerabdruckdatenbank vorliegt, ein Aufruf eines Systems oder eines vorbestimmten Systemmoduses verweigert wird.

12. System zum Verarbeiten von Fingerabdruckinformationen nach Anspruch 8 oder 9, wobei der der Fingerabdruckvorlage zugeordnete Anwendungsbetrieb eine Telefonwahlanwendung ist, und das Betriebsausführungsmodul ferner so konfiguriert ist, wenn es identifiziert wird, dass die mit der eingegebenen Fingerabdruckinformation übereinstimmende Fingerabdruckvorlage in der Fingerabdruckdatenbank vorliegt, eine der identifizierten Fingerabdruckvorlage entsprechende Telefonnummer gewählt wird;
der mit der Fingerabdruckvorlage zugeordnete Anwendungsbetrieb eine Betriebssystemanwendung ist, und das Betriebsausführungsmodul ferner so konfiguriert ist, wenn es identifiziert wird, dass eine mit der eingegebenen Fingerabdruckinformation übereinstimmende Fingerabdruckvorlage in der Fingerabdruckdatenbank vorliegt, ein Betriebssystems oder ein ROM startet, das der identifizierten Fingerabdruckvorlage zugeordnet ist; oder der der Fingerabdruckvorlage zugeordnete Anwendungsbetrieb eine Systemthemaanwendung ist, und das Betriebsausführungsmodul ferner so konfiguriert ist, wenn es identifiziert wird, dass eine mit der eingegebenen Fingerabdruckinformation übereinstimmende Fingerabdruckvorlage in der Fingerabdruckdatenbank vorliegt, eine der identifizierten Fingerabdruckvorlage zugeordnete Information zum Systemthema geladen wird.

13. Mobiles Endgerät, umfassend das System zum Verarbeiten von eingegebenen Fingerabdruckinformationen nach einem der Ansprüche 8 bis 12.

## Revendications

1. Procédé pour traiter les informations d'empreinte digitale d'entrée, comprenant :
une étape d'identification des informations d'empreinte digitale (S101): lorsque l'entrée des informations d'empreinte digitale a été scannée, identifier s'il existe un modèle d'empreinte digitale correspondant aux informations d'empreinte digitale d'entrée dans une base de données d'empreinte digitale, la base de données d'empreinte digitale comprenant une pluralité de modèles d'empreinte digitale pré-enregistrés, et chaque modèle d'empreinte digitale associant à une opération d'application; et
une étape de mise en oeuvre d'opération (8102) : lorsqu'un modèle d'empreinte digitale correspondant aux informations d'empreinte digitale d'entrée a été identifié dans la base de données d'empreinte digitale, exécuter une opération d'application associée au modèle d'empreinte digitale identifié, qui se **caractérise en ce que** :
l'étape d'identification d'empreinte digitale est exécutée à l'état de veille avec l'écran désactivé ; et lorsque l'étape d'identification d'empreinte digitale est exécutée à l'état de veille avec l'écran désactivé, l'étape de mise en oeuvre d'opération comprend d'activer d'abord l'écran, et puis exécuter l'opération d'application associée au modèle d'empreinte digitale.

2. Procédé pour traiter les informations d'empreinte digitale d'entrée selon la revendication 1, **caractérisé en ce que** ledit modèle d'empreinte digitale comprend en outre les informations d'orientation d'empreinte digitale ; et
l'étape d'identification des informations d'empreinte digitale comprend : lorsque l'entrée des informations d'empreinte digitale a été scannée, identifier s'il existe un modèle d'empreinte digitale correspondant aux informations d'empreinte digitale d'entrée et aux informations d'orientation d'empreinte digitale dans la base de données d'empreinte digitale.

3. Procédé pour traiter les informations d'empreinte digitale d'entrée selon la revendication 1 ou 2, **caractérisé en ce que** ladite opération d'application associée au modèle d'empreinte digitale est une application et l'étape de mise en oeuvre d'opération comprend :
lorsqu'un modèle d'empreinte digitale correspondant aux informations d'empreinte digitale d'entrée a été identifié dans la base de données d'empreinte digitale, exécuter l'application associée au modèle d'empreinte digitale identifié.

4. Procédé pour traiter les informations d'empreinte digitale d'entrée selon la revendication 1 ou 2, **caractérisé en ce que** ladite opération d'application associée au modèle d'empreinte digitale est considéré comme un mode de travail, qui comprend un mode propriétaire et un mode non propriétaire avec différentes autorités et l'étape de mise en oeuvre d'opération comprend :
lorsqu'un modèle d'empreinte digitale correspondant aux informations d'empreinte digitale d'entrée a été identifié dans la base de données d'empreinte digitale et les informations d'empreinte digitale correspondent au mode propriétaire, passer au mode propriétaire ;
lorsqu'un modèle d'empreinte digitale correspondant aux informations d'empreinte digitale d'entrée a été identifié dans la base de données d'empreinte digitale et les informations d'empreinte digitale correspondent au mode non propriétaire, passer alors au mode non propriétaire ; et
lorsque aucun modèle d'empreinte digitale correspondant aux informations d'empreinte digitale d'entrée n'a pas été identifié dans la base de données d'empreinte digitale, refuser entrer dans le système ou passer au mode du système prédéterminé.

5. Procédé pour traiter les informations d'empreinte digitale d'entrée selon la revendication 1 ou 2, **caractérisé en ce que** ladite opération d'application associée au modèle d'empreinte digitale est une application de composition, et l'étape de mise en oeuvre d'opération comprend :
lorsqu'un modèle d'empreinte digitale correspondant aux informations d'empreinte digitale d'entrée a été identifié dans la base de données d'empreinte digitale, composer un numéro de téléphone correspondant au modèle d'empreinte digitale identifié.

6. Procédé pour traiter les informations d'empreinte digitale d'entrée selon la revendication 1 ou 2, **caractérisé en ce que** ladite opération d'application associée au modèle d'empreinte digitale est une application de système d'exploitation, et l'étape de mise en oeuvre d'opération comprend :
lorsqu'un modèle d'empreinte digitale correspondant aux informations d'empreinte digitale d'entrée a été identifié dans la base de données d'empreinte digitale, activer un système d'exploitation ou un ROM associé au modèle d'empreinte digitale identifié.

7. Procédé pour traiter les informations d'empreinte digitale d'entrée selon la revendication 1 ou 2, **caractérisé en ce que** ladite opération d'application associée au modèle d'empreinte digitale est une application de thème de système, et l'étape de mise en oeuvre d'opération comprend :
lorsqu'un modèle d'empreinte digitale correspondant aux informations d'empreinte digitale d'entrée a été identifié dans la base de données d'empreinte digitale, charger les informations de thème de système associées au modèle d'empreinte digitale identifié.

8. Un système pour traiter les informations d'empreinte digitale d'entrée, comprenant :
un module de mise en place de base de données d'empreinte digitale (21), configuré pour enregistrer des modèles d'empreinte digitale et associer chaque modèle d'empreinte digitale à une opération d'application ;
un module d'identification des informations d'empreinte digitale (22), configuré pour, lorsque l'entrée des informations d'empreinte digitale a été scannée, identifier s'il existe un modèle d'empreinte digitale correspondant aux informations d'empreinte digitale d'entrée dans la base de données d'empreinte digitale ; et
un module de mise en oeuvre d'opération (23), configuré pour, lorsqu'un modèle d'empreinte digitale correspondant aux informations d'empreinte digitale d'entrée a été identifié dans la base de données d'empreinte digitale, exécuter l'opération d'application associée au modèle d'empreinte digitale identifié, qui se **caractérise en ce que** : le module d'identification d'empreinte digitale exécute l'opération à l'état de veille avec l'écran désactivé ; et lorsque l'opération est exécutée à l'état de veille avec l'écran désactivé, le module de mise en oeuvre d'opération active d'abord l'écran, et puis exécute l'opération d'application associée au modèle d'empreinte digitale.

9. Système pour traiter les informations d'empreinte digitale d'entrée selon la revendication 8, **caractérisé en ce que** ledit modèle d'empreinte digitale comprend en outre les informations d'orientation d'empreinte digitale ; et
le module d'identification des informations d'empreinte digitale est configuré en outre pour, lorsque l'entrée des informations d'empreinte digitale a été scannée, identifier s'il existe un modèle d'empreinte digitale correspondant aux informations d'empreinte digitale d'entrée et aux informations d'orientation d'empreinte digitale dans la base de données d'empreinte digitale.

10. Système pour traiter les informations d'empreinte digitale d'entrée selon la revendication 8 ou 9, **caractérisé en ce que** ladite opération d'application associée au modèle d'empreinte digitale est une application, et
le module mise en oeuvre d'opération est configuré en outre pour, lorsqu'un modèle d'empreinte digitale correspondant aux informations d'empreinte digitale d'entrée a été identifié dans la base de données d'empreinte digitale, exécuter l'application associée au modèle d'empreinte digitale identifié.

11. Système pour traiter les informations d'empreinte digitale d'entrée selon la revendication 8 ou 9, **caractérisé en ce que** ladite opération d'application associée au modèle d'empreinte digitale est considéré comme un mode de travail, qui comprend un mode propriétaire et un mode non propriétaire avec différentes autorités, et
le module de mise en oeuvre d'opération est configuré en outre pour, lorsqu'un modèle d'empreinte digitale correspondant aux informations d'empreinte digitale d'entrée a été identifié dans la base de données d'empreinte digitale et les informations d'empreinte digitale correspondent au mode propriétaire, passer au mode propriétaire ;
lorsqu'un modèle d'empreinte digitale correspondant aux informations d'empreinte digitale d'entrée a été identifié dans la base de données d'empreinte digitale et les informations d'empreinte digitale correspondent au mode non propriétaire, passer alors au mode non propriétaire ;
lorsque aucun modèle d'empreinte digitale correspondant aux informations d'empreinte digitale d'entrée n'a pas été identifié dans la base de données d'empreinte digitale, refuser entrer dans le système ou passer au mode du système prédéterminé.

12. Système pour traiter les informations d'empreinte digitale d'entrée selon la revendication 8 ou 9, **caractérisé en ce que** ladite opération d'application associée au modèle d'empreinte digitale est une application de composition, et le module de mise en oeuvre d'opération est configuré en outre pour, lorsqu'un modèle d'empreinte digitale correspondant aux informations d'empreinte digitale d'entrée a été identifié dans la base de données d'empreinte digitale, composer un numéro de téléphone correspondant au modèle d'empreinte digitale identifié ; l'opération d'application associée au modèle d'empreinte digitale est une application de système d'exploitation, et le module de mise en oeuvre d'opération est configuré en outre pour, lorsqu'un modèle d'empreinte digitale correspondant aux informations d'empreinte digitale d'entrée a été identifié dans la base de données d'empreinte digitale, activer un système d'exploitation ou un ROM associé au modèle d'empreinte digitale identifié ; ou l'opération d'application associée au modèle d'empreinte digitale est une application de thème de système, et le module de mise en oeuvre d'opération est configuré en outre pour, lorsqu'un modèle d'empreinte digitale correspondant aux informations d'empreinte digitale d'entrée a été identifié dans la base de données d'empreinte digitale, charger les informations de thème de système associées au modèle d'empreinte digitale identifié.

13. Un terminal mobile, comprenant le système pour traiter les informations d'empreinte digitale d'entrée selon l'une quelconque des revendications 8 à 12.
